# EUROPÄISCHE PATENTANMELDUNG

(11) **EP 3 296 750 A2**
(43) Veröffentlichungstag der Anmeldung: **21.03.2018**
(21) Anmeldenummer: 17187693.1
(22) Anmeldetag: 24.08.2017
(51) Int. Cl.: G01P 13/04, G01P 3/486, G01P 3/26, G01P 3/481

(54) **VORRICHTUNG UND VERFAHREN ZUR MESSUNG EINER ROTATIONSBEWEGUNG EINES DREHBAREN BAUTEILS, INSBESONDERE EINER ROTATIONSRICHTUNG**

(30) Priorität: 15.09.2016 DE 102016217687
(71) Anmelder: Rolls-Royce Deutschland Ltd & Co KG, 15827 Blankenfelde-Mahlow (DE)
(72) Erfinder: KESTERING, Jens, 12526 Berlin (DE)
(74) Vertreter: Maikowski & Ninnemann Patentanwälte Partnerschaft mbB

(57) **Zusammenfassung**

Die Erfindung betrifft eine Vorrichtung zur Messung einer Rotationsbewegung, insbesondere einer Geschwindigkeit und Rotationsrichtung, eines drehbaren Bauteils (20, 21), insbesondere einer Welle, mit mindestens zwei Empfängern (10, 10') und einem Musterträger (11, 11'), der mindestens zwei Musterstellen (110) aufweist und der derart mit dem drehbaren Bauteil (20, 21) verbindbar oder verbunden ist, dass er gemeinsam damit um eine Rotationsachse (R) bezüglich dem Empfänger (10, 10') rotierbar ist, sodass jedem Empfänger mindestens eine Musterstelle (110) zuwendbar ist, wobei der Empfänger (10, 10') ausgebildet und eingerichtet ist, eine ihm zugewandte Musterstelle (110) zu erfassen. Die Empfänger (10, 10') und/oder die Musterstellen (110) sind entlang einer um die Rotationsachse (R) umlaufenden Bewegungsrichtung um einen Winkel (ϕ) versetzt zueinander angeordnet. Falls Empfänger und Musterstellen versetzt zueinander angeordnet sind, haben sie einen unterschiedlichen Versatz.

## Beschreibung

Die Erfindung betrifft eine Vorrichtung zur Messung einer Rotationsbewegung eines drehbaren Bauteils mit den Merkmalen des Anspruchs 1, eine Turbomaschine und ein Verfahren zur Messung einer Rotationsbewegung eines drehbaren Bauteils mit den Merkmalen des Anspruchs 15.

Eine derartige Vorrichtung umfasst einen Empfänger und einen mit dem Empfänger zusammenwirkenden Musterträger. Der Musterträger umfasst zumindest zwei Musterstellen. Der Musterträger ist derart mit dem drehbaren Bauteil verbindbar oder verbunden, dass er gemeinsam mit dem drehbaren Bauteil um eine Rotationsachse bezüglich dem Empfänger rotierbar ist. Durch eine Rotation des Musterträgers um die Rotationsachse ist zumindest eine Musterstelle dem Empfänger insbesondere periodisch zuwendbar und abwendbar. Der Empfänger ist ausgebildet und eingerichtet, eine ihm zugewandte Musterstelle zu erfassen, d.h. zu erfassen, ob ihm eine Musterstelle zugewandt ist oder nicht.

Die mit solchen Vorrichtungen gemessenen Rotationsbewegungen des drehbaren Bauteils können z.B. zur Steuerung und Überwachung des drehbaren Bauteils verwendet werden. Bei dem drehbaren Bauteil handelt es sich etwa um eine Welle und/oder eine Achse, insbesondere um eine Welle einer Turbomaschine wie einer als Flugzeugtriebwerk ausgebildeten Turbomaschine.

Die Messung einer Rotationsbewegung umfasst die Messung einer Rotationsgeschwindigkeit und/oder die Messung einer Rotationsrichtung.

Aus der Praxis sind z.B. induktive Vorrichtungen zur Messung von Rotationsgeschwindigkeiten bekannt, welche auch als Impulsrad, phonisches Rad oder "phonic wheel" bezeichnet werden.

Die DE 10 2007 055 239 A1 beschreibt eine Vorrichtung zur Messung der Rotationsgeschwindigkeit einer in einem Turbinengehäuse gelagerten Hohlwelle eines Strahltriebwerks. Bei dieser Vorrichtung dienen magnetische Flüsse als Informationsträger. Ein Musterträger in Form einer Verzahnung mit mehreren Zähnen als Musterstellen wird an der Hohlwelle angeordnet. Ein benachbart zur Verzahnung angeordneter Sensor dient als Empfänger. Die Verzahnung ist gemeinsam mit der Welle um die Rotationsachse der Welle bezüglich dem Sensor rotierbar, der unterschiedliche magnetische Flüsse erfasst, wenn ein Zahn oder eine Lücke der Verzahnung dem Sensor zugewandt ist.

In einigen Anwendungen, insbesondere bei Turbomaschinen, ist es wünschenswert, neben der Rotationsgeschwindigkeit zusätzlich auch eine absolute Winkellage (insbesondere bezüglich einer das drehbare Bauteil lagernden Statik) und/oder eine Rotationsrichtung des drehbaren Bauteils, insbesondere der Welle, zu messen. Wird z.B. eine nicht in Betrieb befindliche Turbomaschine, z.B. ein Flugzeugtriebwerk, durch einen Wind beaufschlagt, können eine oder mehrere Wellen der Turbomaschine in eine Drehung versetzt werden. Eine solche Situation wird auch als "wind milling" bezeichnet.

Bei einer rückseitigen Beaufschlagung mit Wind ist es möglich, dass eine oder mehrere Wellen der Turbomaschine in eine Drehung entgegengesetzt der bestimmungsgemäßen Drehung im Betrieb versetzt werden. Ein Start der Turbomaschine mit einer Kraftstoffzufuhr während dieser verkehrten Drehung kann zu einer Überhitzung und einer Beschädigung der Turbomaschine führen. So ist es bei starkem Wind möglich, dass eine Mindestdrehzahl der Turbomaschine vom Betrag her durch "wind milling" erreicht wird. Wird die bestimmungsgemäße Drehrichtung der Turbomaschine beim Starten von einem Benutzer nicht beachtet, etwa weil keine Drehrichtungsanzeige vorgesehen ist, kann es insbesondere zu einer Beschädigung eines Verdichters der Turbomaschine durch Überhitzung kommen.

Ferner können die bekannten induktiven Messungen je nach Einsatzort der Vorrichtung durch externe elektromagnetische Einflüsse gestört werden.

Es besteht die Aufgabe, eine verbesserte Vorrichtung bereitzustellen. Die Aufgabe wird durch eine Vorrichtung mit den Merkmalen des Anspruchs 1 gelöst.

Danach sind mindestens zwei Empfänger vorgesehen. Die Empfänger und mindestens zwei der Musterstellen sind so angeordnet, dass den Empfängern jeweils mindestens eine der Musterstellen zuwendbar ist. Dabei sind die Empfänger untereinander entlang eines um die Rotationsachse umlaufenden Winkels versetzt zueinander angeordnet, während die Musterstellen untereinander entlang des Winkels nicht versetzt zueinander angeordnet sind, oder die Musterstellen sind untereinander entlang des Winkels versetzt zueinander angeordnet, während die Empfänger untereinander entlang des Winkels nicht versetzt zueinander angeordnet sind, oder sowohl die Empfänger als auch die Musterstellen sind jeweils untereinander entlang eines um die Rotationsachse umlaufenden Winkels versetzt zueinander angeordnet, wobei die Musterstellen einen Versatz aufweisen, der sich von einem Versatz der Empfänger unterscheidet. Die Empfänger sind insbesondere lagefest zueinander angeordnet.

Der um die Rotationsachse umlaufende Winkel wird auch als Azimutwinkel oder Azimut bezeichnet. Bei der Anordnung der Musterstellen kann vorgesehen sein, dass jede Musterstelle nur genau einem der Empfänger zuwendbar ist.

Der Einsatz mehrerer Empfänger ermöglicht besonders präzise Messungen der Rotationsbewegung des drehbaren Bauteils. Ferner ermöglichen der Einsatz mehrerer Empfänger und der verschiedene Versatz der Empfänger und der Musterstellen neben der Messung einer Rotationsgeschwindigkeit des drehbaren Bauteils (bezüglich der Empfänger) zusätzlich die Messung einer Rotationsrichtung und einer absoluten Winkellage des drehbaren Bauteils. Handelt es sich bei dem drehbaren Bauteil z.B. um eine Welle einer Turbomaschine, sind die Empfänger beispielsweise an einer die Welle drehbar lagernden Statik der Turbomaschine festgelegt.

Die einzelnen Empfänger und/oder die einzelnen Musterstellen können in (radialer) Richtung senkrecht zur Rotationsachse versetzt (z.B. beabstandet) zueinander angeordnet sein. Alternativ oder zusätzlich sind die einzelnen Empfänger und/oder die einzelnen Musterstellen in (axialer) Richtung parallel zur Rotationsachse versetzt (z.B. beabstandet) zueinander angeordnet. Zum Beispiel sind die einzelnen Empfänger und die einzelnen Musterstellen jeweils mit demselben Versatz zueinander angeordnet. Es können ein oder mehrere Empfänger und/oder eine oder mehrere Musterstellen jeweils im Wesentlichen in demselben radialen und/oder axialen Abstand zur Rotationsachse angeordnet sein. Hierdurch kann eine besonders hohe Messgenauigkeit erzielt werden.

Die mindestens zwei Musterstellen können nach einem ersten Muster angeordnet sein und die mindestens zwei Empfänger nach einem zweiten Muster. Dabei ist das erste Muster insbesondere von dem zweiten Muster verschieden. Die Muster können sich jeweils in einer Ebene senkrecht zur Rotationsachse erstrecken. Die Musterstellen sind beispielsweise in einer entlang der Rotationsachse zu den Empfängern versetzten Ebene angeordnet. Die Empfänger können die Musterstellen in axialer Richtung erfassen. Alternativ erstrecken sich die Muster jeweils in einer um die Rotationsachse umlaufenden Ebene. Die Empfänger sind beispielsweise radial außerhalb der Musterstellen angeordnet. Die Empfänger können die Musterstellen in radialer Richtung erfassen. Das erste Muster der Musterstellen (und/oder das zweite Muster der Empfänger) kann insbesondere entlang des Azimutwinkels der Rotationsachse mehrmals vorgesehen sein, z.B. jeweils äquidistant und/oder punktsymmetrisch zu einem Punkt auf der Rotationsachse.

Zumindest einige der Musterstellen und/oder der Empfänger sind beispielsweise jeweils entlang einer geraden (oder im Wesentlichen geraden) Linie oder entlang einer gebogenen Linie angeordnet. Zum Beispiel sind die Musterstellen entlang einer gebogenen Line als erstes Muster angeordnet und die Empfänger sind entlang einer geraden Linie als zweites Muster angeordnet.

Jeweils genau drei oder mehr als drei (insbesondere ein Vielfaches von drei) Musterstellen und drei oder mehr als drei Empfänger können vorgesehen sein. Jede der Musterstellen kann jeweils zumindest einem oder genau einem der Empfänger zuwendbar sein. Durch die Verwendung von drei oder mehr Empfängern und Musterstellen ist eine hohe Messgenauigkeit erzielbar. Auch führt dann der Ausfall einer Musterstelle oder eines Empfängers nicht unmittelbar zum Ausfall einer Funktion der Vorrichtung.

Die Empfänger können ausgebildet und eingerichtet sein, einen aus einer zugewandten Musterstelle austretenden oder mit der Musterstelle wechselwirkenden Informationsträger zu erfassen. Der Informationsträger ist z.B. als (insbesondere elektromagnetische) Strahlung, als Massefluss und/oder als Schall ausgebildet, insbesondere als Lichtstrahlen (z.B. sichtbare Lichtstrahlen, infrarote Lichtstrahlen und/oder ultraviolette Lichtstrahlen), als elektromagnetisches Feld, als Luftstrom und/oder als Ultraschall. Indem ein Empfänger den Informationsträger registriert, erfasst er, dass ihm eine Musterstelle zugewandt ist.

Die mindestens zwei Empfänger umfassen gemäß einer Weiterbildung zumindest einen Sensor oder sind mit zumindest einem Sensor wirkverbunden. Der Sensor ist ausgebildet, den Informationsträger erfassen. Der Sensor ist insbesondere in Form eines optischen Sensors (z.B. in Form eines Photowiderstandes und/oder einer Photodiode), eines Masseflussmessers, eines Druckmessers und/oder eines Mikrofons ausgebildet. Es kann vorgesehen sein, dass jeder der Empfänger der Vorrichtung jeweils einen Sensor, z.B. einen optischen Sensor umfasst. Alternativ oder zusätzlich sind die Empfänger mit einem gemeinsamen Sensor wirkverbunden. Ein Sensor kann ein Signal erzeugen, das z.B. an eine Auswerteeinheit bereitgestellt wird, die es verarbeiten kann.

Die Vorrichtung kann mindestens eine Sendeeinheit umfassen, die ausgebildet und eingerichtet ist, den Informationsträger (insbesondere in Richtung mindestens eines Empfängers) auszusenden. Die Sendeeinheit umfasst z.B. zumindest eine Lichtquelle (z.B. eine Leuchtdiode oder Laserdiode), Luftdüse und/oder Schallquelle. Jedem der Empfänger kann jeweils eine eigene Sendeeinheit zugeordnet sein. Mehrere oder alle Sendeeinheiten können gemäß demselben zweiten Muster angeordnet sein wie die Empfänger. Das zweite Muster der Sendeeinheiten ist z.B. in Deckung mit dem zweiten Muster der Empfänger angeordnet.

Der Musterträger ist z.B. zwischen der mindestens einen Sendeeinheit und den mindestens zwei Empfängern angeordnet, insbesondere im Wesentlichen senkrecht oder parallel zur Rotationsachse. Alternativ oder zusätzlich ist eine Sendeeinheit am Musterträger angeordnet, insbesondere an den Musterstellen des Musterträgers. Weiter alternativ oder zusätzlich ist zumindest eine Sendeeinheit, etwa eine Lichtquelle, an zumindest einem Empfänger angeordnet. Beispielsweise dient als alternative Musterstelle jeweils ein Spiegel oder ein Permanentmagnet.

Der Musterträger ist z.B. in Form einer Lochscheibe ausgebildet, insbesondere in Form einer koaxial zur Rotationsachse angeordneten Kreisscheibe und/oder als Hohlzylinder. Die Musterstellen sind z.B. in einem senkrecht zur Rotationsachse erstreckten Materialabschnitt des Musterträgers ausgebildet. Alternativ sind Musterstellen an einem Mantelabschnitt des Hohlzylinders ausgebildet, insbesondere an gegenüberliegenden Mantelabschnitten. Die Musterstellen sind beispielsweise jeweils in Form eines Lochs, insbesondere als Bohrung im Musterträger ausgebildet. Insbesondere wenn die Musterstellen als Löcher ausgebildet sind, kann der Musterträger im Bereich der Musterstellen durchlässig für den Informationsträger sein. Zum Beispiel ist der Musterträger nur im Bereich der Musterstellen durchlässig für den Informationsträger. Optional ist der Musterträger aus einem lichtundurchlässigen Material hergestellt oder umfasst ein lichtundurchlässiges Material. Die Löcher können jeweils mit derselben Größe oder mit unterschiedlicher Größe ausgebildet sein.

Insbesondere jeweils als Loch ausgebildete Musterstellen können sich im Wesentlichen parallel zur Rotationsachse durch den Musterträger hindurch erstrecken. Der Informationsträger (z.B. Lichtstrahlen) kann dann parallel zur Rotationsachse durch die Löcher hindurchtreten. Der Informationsträger kann dann in Richtung parallel zur Rotationsachse vom Empfänger ausgelesen werden. Alternativ erstrecken sich die Musterstellen unter einem Winkel zur Rotationsachse, z.B. im Wesentlichen senkrecht zur Rotationsachse durch den Musterträger hindurch. Der Informationsträger kann unter dem (z.B. im Wesentlichen senkrechten) Winkel zur Rotationsachse durch den Musterträger hindurchtreten. Der Informationsträger kann dann in Richtung des (z.B. im Wesentlichen senkrechten) Winkels zur Rotationsachse vom Empfänger ausgelesen werden.

Die Vorrichtung kann mindestens eine Antibeschlageinrichtung umfassen. Die Antibeschlageinrichtung richtet z.B. einen Fluidstrom, insbesondere einen Luftstrom, auf mindestens einen der Empfänger, insbesondere auf alle Empfänger und/oder auf zumindest eine oder alle Sendeeinheiten, um einen Niederschlag von flüssigen oder festen Schwebeteilchen, durch Kondensation und/oder durch Resublimation aus einem umgebenden Gas auf dem Empfänger (und/oder auf der Sendeeinheit) zu verhindern. Hierdurch wird eine ungestörte Funktion der Vorrichtung ermöglicht. Zudem kann der Fluid-/Luftstrom die Empfänger und/oder Sendeeinheiten kühlen, wodurch eine einwandfreie Funktion und/oder eine möglichst lange Lebensdauer des Empfängers gewährleistet werden kann.

Die Aufgabe wird auch durch eine Turbomaschine gemäß Anspruch 13 gelöst.

Eine solche Turbomaschine, insbesondere in Form eines Flugzeugtriebwerks oder eines stationären Turbinenkraftwerks, umfasst eine oder mehrere Wellen und eine oder mehrere Vorrichtungen gemäß einer beliebigen hierin beschriebenen Ausführung. Der Musterträger der Vorrichtung ist dabei insbesondere drehfest mit der Welle verbunden, z.B. mit einer Niederdruckwelle, einer Mitteldruckwelle und/oder einer Hochdruckwelle der Turbomaschine.

Mit Hilfe der Vorrichtung kann sowohl die Rotationsgeschwindigkeit als auch die absolute Winkelposition und die Rotationsrichtung einer oder mehrerer Wellen der Turbomaschine verlässlich gemessen werden. Durch die Messung der Rotationsrichtung der Welle oder der Wellen der Turbomaschine kann eine verkehrte Rotationsrichtung erkannt werden. Vor der Zündung der Turbomaschine kann, falls notwendig, eine Korrektur der Rotationsrichtung vorgenommen werden, um eine Beschädigung zu verhindern.

Zumindest eine Vorrichtung kann im Bereich einer Lagerstelle der Welle an der Turbomaschine angeordnet sein. An der Lagerstelle ist die Welle z.B. an einer Statik der Turbomaschine drehbar gelagert. Im Bereich der Lagerstellen sind eine Festlegung des Musterträgers der Vorrichtung an der Welle und der Empfänger an der Statik der Turbomaschine besonders gut zu integrieren.

Die Aufgabe wird auch durch ein Verfahren zur Messung einer Rotationsbewegung eines drehbaren Bauteils, insbesondere einer Rotationsgeschwindigkeit, einer Rotationsrichtung und/oder einer absoluten Winkellage, mit den Merkmalen des Anspruchs 15 gelöst.

Das Verfahren verwendet einen Empfänger und einen Musterträger, der mindestens zwei Musterstellen aufweist und der derart mit dem drehbaren Bauteil, insbesondere einer Welle, verbunden wird, dass er gemeinsam damit um eine Rotationsachse bezüglich dem Empfänger rotiert werden kann, sodass die Musterstelle dem Empfänger zugewandt werden kann, wobei der Empfänger eine ihm zugewandte Musterstelle erfasst.

Dabei werden mindestens zwei Empfänger vorgesehen, denen jeweils mindestens eine der Musterstellen zugewandt werden kann, wobei die Empfänger oder die Musterstellen entlang eines um die Rotationsachse umlaufenden Winkels versetzt zueinander angeordnet werden oder mit einem unterschiedlichen Versatz entlang des Winkels versetzt zueinander angeordnet werden, wobei insbesondere eine Vorrichtung nach einer beliebigen hierin beschriebenen Ausführung verwendet wird.

Im Zusammenhang mit den in den Figuren dargestellten Ausführungsbeispielen wird die Erfindung erläutert. Dabei zeigen
- Fig. 1: eine schematische Darstellung eines Flugzeugtriebwerkes als Ausführungsform einer Turbomaschine;
- Fig. 2: eine schematische Darstellung einer Vorrichtung zur Messung einer Rotationsbewegung eines um eine Rotationsachse drehbaren Bauteils in einer ebenen Schnittansicht;
- Fig. 3: eine schematische Darstellung eines in Form einer Lochscheibe ausgebildeten Musterträgers der Vorrichtung gemäß Fig. 2 in einer Draufsicht entlang der Rotationsachse;
- Fig. 4: eine schematische Darstellung einer Anordnung mehrerer Empfänger der Vorrichtung gemäß Fig. 2-3 in einer Draufsicht entlang der Rotationsachse;
- Fig. 5: eine schematische Darstellung beispielhafter Messwerte der Empfänger der Vorrichtung gemäß Fig. 2-4;
- Fig. 6: eine schematische Darstellung einer Antibeschlageinrichtung der Vorrichtung gemäß Fig. 2-5;
- Fig. 7A-7C: verschiedene schematische Darstellungen alternativer Anordnungen der Lochscheibe der Vorrichtung gemäß Fig. 2-6 am drehbaren Bauteil;
- Fig. 8: eine schematische Darstellung einer Vorrichtung zur Messung einer Rotationsbewegung eines um eine Rotationsachse drehbaren Bauteils in einer gemäß Fig. 2 aufgeschnittenen Ansicht;
- Fig. 9: eine schematische Darstellung einer Vorrichtung zur Messung einer Rotationsbewegung eines um eine Rotationsachse drehbaren Bauteils in einer perspektivischen Ansicht;
- Fig. 10: eine schematische Darstellung beispielhafter Messwerte der Empfänger der Vorrichtung gemäß Fig. 2-4, 8 und 9 bei Ausfall von einem oder zwei Empfängern; und
- Fig. 11: ein Flussdiagramm für ein Verfahren zur Messung einer Rotationsbewegung.

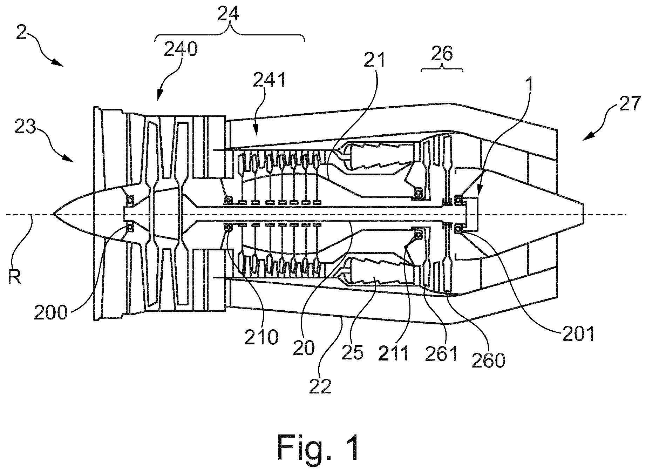

Fig. 1 zeigt eine Turbomaschine in der Ausführungsform eines Flugzeugtriebwerks 2 für ein Flugzeug. Das Flugzeugtriebwerk 2 umfasst mehrere, vorliegend zwei um eine gemeinsame Rotationsachse R drehbare Wellen 20, 21 als drehbare Bauteile. Die Wellen 20, 21 sind innerhalb eines Gehäuses 22 des Flugzeugtriebwerks 2 angeordnet. Das Gehäuse 22 definiert einen Lufteinlauf 23 des Flugzeugtriebwerks 2.

Durch den Lufteinlauf 23 strömt ein Luftstrom in das Flugzeugtriebwerk 2. Das Flugzeugtriebwerk 2 weist eine axiale Durchdurchströmungsrichtung auf. Die Durchdurchströmungsrichtung verläuft im Wesentlichen entlang der Rotationsachse R der Wellen 20, 21. Im Wesentlichen in Richtung der Durchdurchströmungsrichtung gesehen umfasst das Flugzeugtriebwerk 2 nach dem Lufteinlauf 23 einen Verdichter 24, eine Brennkammer 25, eine Turbine 26 und eine Düse 27.

Das Flugzeugtriebwerk 2 ist vorliegend zweistufig ausgeführt. Eine der Wellen 20, 21 dient als Niederdruckwelle 20, die andere als Hochdruckwelle 21. An der Niederdruckwelle 20 sind ein Niederdruckverdichter 240 des Verdichters 24 sowie eine Niederdruckturbine 260 der Turbine 26 festgelegt. An der Hochdruckwelle 21 sind ein Hochdruckverdichter 240 des Verdichters 24 sowie eine Hochdruckturbine 260 der Turbine 26 festgelegt.

Das Flugzeugtriebwerk 2 arbeitet in an sich bekannter Weise. Der Niederdruckverdichter 240 und der Hochdruckverdichter 241 verdichten den einlaufenden Luftstrom und führen ihn zur Verbrennung in die Brennkammer 25. Aus der Brennkammer 25 austretende heiße Verbrennungsgase werden in der Hochdruckturbine 261 und in der Niederdruckturbine 260 entspannt, bevor sie durch die Düse 27 austreten. Die Düse 27 sorgt für eine Restentspannung der austretenden heißen Verbrennungsgase und für eine Vermischung mit Sekundärluft. Dabei wird der austretende Luftstrom beschleunigt, wodurch Schub erzeugt wird.

Die Niederdruckturbine 260 treibt den Niederdruckverdichter 240 über die Niederdruckwelle 20 an. Die Hochdruckturbine 261 treibt den Hochdruckverdichter 241 über die Hochdruckwelle 21 an.

Beide Wellen 20, 21 sind über geeignete Lager 200, 201, 210, 211 gegenüber einer Triebwerksstatik um die Rotationsachse R drehbar gelagert. Die Triebwerksstatik ist fest mit dem Gehäuse 22 verbunden. Die Triebwerksstatik ist fest mit dem Flugzeug verbindbar.

Gemäß Fig. 1 weisen die Niederdruckwelle 20 und die Hochdruckwelle 21 an ihrem jeweiligen dem Lufteinlauf 23 zugewandten Ende ein vorderes Lager 200, 210 auf. Die vorderen Lager 200, 210 sind jeweils als Kugellager ausgebildet. An ihrem jeweiligen dem Luftauslass 27 zugewandten Ende umfassen die Niederdruckwelle 20 und die Hochdruckwelle 21 ein hinteres Lager 201, 211. Die hinteren Lager 201, 211 sind jeweils als Wälzlager ausgebildet.

Die Hochdruckwelle 21 ist als Hohlwelle ausgebildet. Die Niederdruckwelle 20 ist innerhalb der Hochdruckwelle 21 angeordnet.

Zur Bestimmung einer Rotationsbewegung der Niederdruckwelle 20, nämlich sowohl einer Rotationsgeschwindigkeit als auch einer absoluten Winkellage und einer Rotationsrichtung, umfasst das Flugzeugtriebwerk 2 eine in Fig. 1 lediglich schematisch dargestellte Vorrichtung 1. Die Vorrichtung 1 ist vorliegend im Bereich des hinteren Lagers 201 der Niederdruckwelle 20 angeordnet.

Die Vorrichtung 1 wird anhand der nachfolgenden Figuren näher erläutert werden.

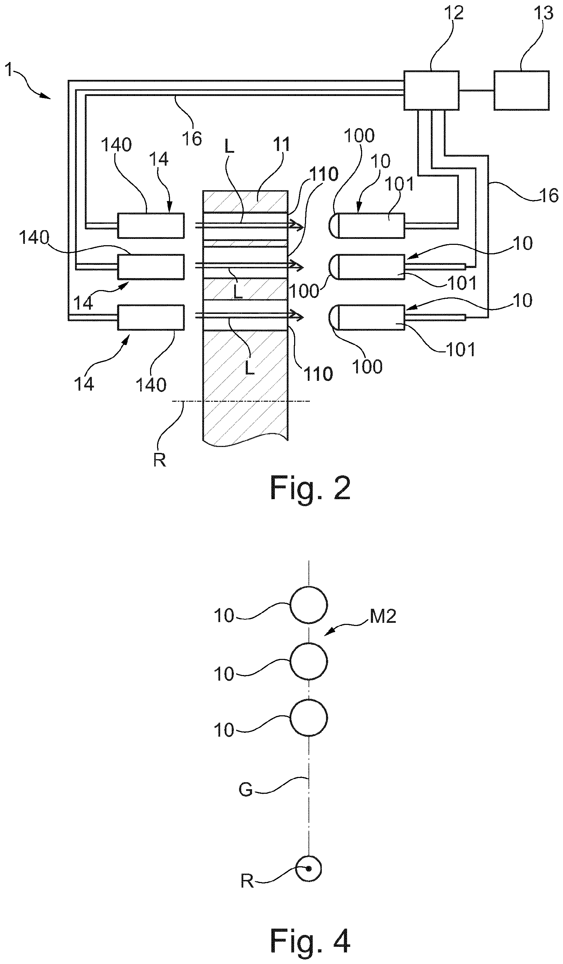

Gemäß Fig. 2 umfasst eine Vorrichtung 1 einen Musterträger 11, mehrere Empfänger 10 und mehrere Sendeeinheiten 14. Dabei ist jeweils einer der Empfänger 10 genau einer der Sendeeinheiten 14 zugeordnet. Im gezeigten Ausführungsbeispiel umfasst die Vorrichtung 1 genau drei Empfänger 10 und genau drei Sendeeinheiten 14.

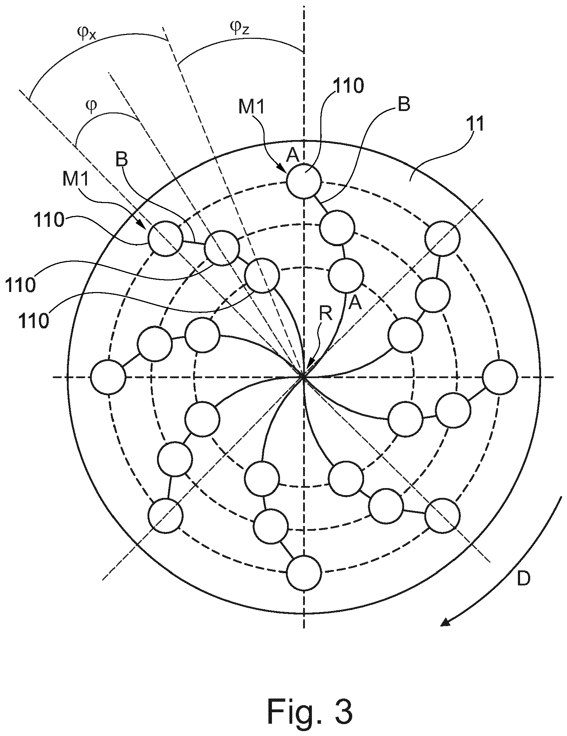

Wie insbesondere Fig. 3 veranschaulicht, ist der Musterträger 11 im gezeigten Ausführungsbeispiel in Form einer kreisförmigen Lochscheibe 11 ausgebildet. Die Lochscheibe 11 ist konzentrisch zur Rotationsachse R angeordnet. Die Lochscheibe 11 ist drehfest mit der Niederdruckwelle 20 verbunden.

Die Empfänger 10 umfassen vorliegend jeweils einen optischen Sensor 101, z.B. in Form jeweils eines Photowiderstandes und/oder einer Photodiode. Für eine effiziente Lichtausbeute ist jedem der Sensoren 101 jeweils eine Linse 100 vorgeschaltet, z.B. in Form jeweils einer Sammellinse.

Die Sendeeinheiten 14 umfassen jeweils eine Lichtquelle 140, z.B. in Form einer Leuchtdiode und/oder einer Laserdiode. Die Lichtquellen 140 senden Lichtstrahlen L als Informationsträger aus, welche von den Empfängern 10 erfasst werden können. Jede der Sendeeinheiten 14 und der jeweils zugeordnete Empfänger 10 sind auf einander ausgerichtet. Lichtstrahlen werden nicht durch externe elektromagnetische Signale gestört und sind daher besonders gut als Informationsträger geeignet.

Die Empfänger 10 und die Sendeeinheiten 14 sind lagefest zueinander angeordnet, z.B. durch eine Befestigung an der Triebwerksstatik und/oder einem gemeinsamen Träger. Die (vorliegend drei) Sendeeinheiten 14 sind im Wesentlichen parallel zueinander ausgerichtet. Die jeweils zu den Empfängern 10 hin ausgesandten Lichtstrahlen L verlaufen (zumindest teilweise) im Wesentlichen parallel zueinander. Die von den Sendeeinheiten 14 zu den Empfängern 10 hin ausgesandten Lichtstrahlen L verlaufen im Wesentlichen parallel zur Rotationsachse R.

Zwischen den Sendeeinheiten 14 und den Empfängern 10 ist die Lochscheibe 11 angeordnet. Die Lochscheibe 11 ist um die Rotationsachse R rotierbar. Hierzu ist die Lochscheibe 11 drehfest mit der Niederdruckwelle 20 verbunden. Die Lochscheibe 11 ist derart an der Niederdruckwelle 20 angeordnet, dass sie gemeinsam mit der Niederdruckwelle 20 um die Rotationsachse R rotierbar ist. Beispielsweise ist die Lochscheibe 11 einstückig mit der Niederdruckwelle 20 ausgebildet oder in geeigneter Weise daran befestigt, z.B. angeschraubt.

Wie insbesondere in Fig. 3 veranschaulicht, sind in der Lochscheibe 11 mehrere Musterstellen in Form von durchgehenden Löchern 110 vorgesehen. Die Löcher 110 erstrecken sich im Wesentlichen parallel zu den von den Sendeeinheiten 14 zu den Empfängern 10 hin ausgesandten Lichtstrahlen L durch die Lochscheibe 11. Jedes der Löcher 110 ist genau einem der Empfänger 10 zugeordnet. Die Löcher 110 sind kreisförmig ausgebildet und weisen jeweils dieselbe Größe auf.

Ist ein Loch 110 zwischen der zugeordneten Sendeeinheit 14 und dem zugeordneten Empfänger 10 angeordnet (durch eine entsprechende Lage durch Rotation der Lochscheibe 11), können die von der Sendeeinheit ausgesandten Lichtstrahlen L durch das Loch 110 hindurchtreten. Die Sendeeinheit 14, das Loch 110 und der Empfänger 10 sind dann im Wesentlichen auf einer parallel zur Rotationsachse R verlaufenden Geraden angeordnet. Auf der der Sendeeinheit 14 gegenüberliegenden Seite der Lochscheibe 11 treten die Lichtstrahlen L aus dem Loch 110 aus und werden vom Empfänger 10 erfasst.

Ist kein Loch 110 zwischen der zugeordneten Sendeeinheit 14 und dem zugeordneten Empfänger 10 angeordnet, können die Lichtstrahlen L der Sendeeinheit 14 die Lochscheibe 11 nicht passieren. Der zugeordnete Empfänger 10 erfasst die Lichtstrahlen L dann nicht.

Jeweils drei Löcher 110 der Lochscheibe 11 sind gemäß einem ersten Muster M1 zueinander angeordnet. Das erste Muster M1 beschreibt eine gebogene Linie B. Somit sind jeweils drei Löcher 110 entlang der gebogenen Linie B angeordnet. Die gebogene Linie B schneidet die Rotationsachse R. Vorliegend ist die gebogene Linie B beispielhaft in Form eines Kreisbogens ausgebildet. Allgemein kann die gebogene Linie B als Teilabschnitt einer Ellipse ausgebildet sein. Die gebogene Line B kann so ausgebildet sein, dass die Löcher 110 (oder allgemein Musterstellen) eines ersten Musters M1 mit einem unregelmäßigen Winkelversatz entlang des Azimuts zueinander angeordnet sind.

Alternativ zu einer gebogenen Linie B kann das erste Muster M1 auch so ausgebildet sein, dass es eine gerade Linie beschreibt. Die gerade Linie schneidet die Rotationsachse R oder verläuft so, dass sie die Rotationsachse nicht schneidet.

Gemäß einer weiteren möglichen Alternative ist das erste Muster M1 so ausgebildet, dass zwischen einigen oder allen benachbarten Löchern (oder allgemein Musterstellen) des ersten Musters M1 derselbe Versatz entlang des Azimuts oder im Wesentlichen derselbe Versatz entlang des Azimuts vorgesehen ist.

Das erste Muster M1 wiederholt sich entlang eines senkrecht zur Rotationsachse R um die Rotationsachse R umlaufenden Azimuts mehrmals, vorliegend acht Mal. An mehreren (vorliegend drei) verschiedenen Radien zur Rotationsachse R ist jeweils eine Vielzahl von (vorliegend jeweils acht) Löchern 110 kreisförmig angeordnet. Die Kreise aus Löchern 110 sind entlang dem Azimut versetzt zueinander angeordnet.

Jeweils zwei einem gemeinsamen ersten Muster M1 zugeordnete (also auf einer gemeinsamen gebogenen Linie B beabstandet zueinander angeordnete) Löcher 110 sind entlang dem Azimut um einen Azimuntwinkel ϕ versetzt zueinander angeordnet. Ein Versatz entlang des Azimuts zwischen zwei benachbarten, demselben ersten Muster M1 zugeordneten Löchern 110 entspricht z.B. bis zu einem Zehntel eines Durchmessers oder in etwa einem Zehntel eines Durchmessers bis zu einem Durchmesser jener Löcher 110, insbesondere weniger als der Hälfte eines Durchmessers oder etwa einem Viertel bis der Hälfte eines Durchmessers jener Löcher 110.

Es kann vorgesehen sein, dass alle Löcher 110, die einem gemeinsamen ersten Muster M1 zugeordnet sind, jeweils etwa um denselben Azimutwinkel ϕ versetzt zueinander angeordnet sind. Alternativ sind die Azimutwinkel ϕ verschieden. Beispielsweise ist der Azimutwinkel ϕ zwischen dem radial äußeren Loch 110 und dem radial mittleren Loch 110 größer oder kleiner als der Azimutwinkel zwischen dem radial mittleren Loch und dem radial inneren Loch 110.

Wie in Fig. 3 dargestellt, überspannen die Löcher 110 eines ersten Musters M1 insgesamt einen Azimutwinkel ϕₓ (wobei der Azimutwinkel vorliegend auf die Mittelpunkte der Löcher 110 bezogen ist). Dieser Winkel ϕₓ kann auch als Musterbreite ϕₓ bezeichnet werden. Die Musterbreite ϕₓ ist größer als der Azimutwinkel ϕ, um den zwei entlang des Azimuts benachbarte Löcher 110 (oder allgemein zwei entlang des Azimuts benachbarte Musterstellen) versetzt zueinander angeordnet sind: ϕₓ > ϕ.

Zwei benachbarte erste Muster M1 können (wie in Fig. 3 gezeigt) entlang dem Azimut um einen Azimuntwinkel ϕ_{z} versetzt zueinander angeordnet sein. Der Azimutwinkel ϕ_{z} kann auch als Musterabstand ϕ_{z} bezeichnet werden. Der Musterabstand ϕ_{z} ist größer als die Musterbreite ϕₓ: ϕ_{z} > ϕₓ.

Fig. 2 zeigt eine Ansicht gemäß einem in Fig. 3 eingezeichneten Schnitt A-A entlang einer gebogenen Linie B. Bei entsprechender Ausrichtung der Lochscheibe 11 können Lichtstrahlen L jeder der Sendeeinheiten 14 durch ein zugeordnetes Loch 110 durchtreten und vom zugeordneten Empfänger 10 erfasst werden.

Wie Fig. 4 veranschaulicht, sind die vorliegend drei Empfänger 10 der Vorrichtung 1 gemäß einem zweiten Muster M2 angeordnet. Das zweite Muster M2 unterscheidet sich von dem ersten Muster M1. Vorliegend beschreibt das zweite Muster M1 eine gerade Linie G. Die gerade Linie G schneidet die Rotationsachse R. Alternativ kann vorgesehen sein, dass die gerade Linie G die Rotationsachse R nicht schneidet.

Die (vorliegend drei) gemäß dem zweiten Muster M2 angeordneten Empfänger 10 sind im Wesentlichen in denselben radialen Abständen zur Rotationsachse R angeordnet wie die einem gemeinsamen ersten Muster M1 zugeordneten, vorliegend in Form von Löchern 110 ausgebildeten Musterstellen.

Jedes der Löcher 110 ist einem Paar aus einer Sendeeinheit 14 und einem Empfänger 10 zugeordnet. Vorliegend sind all diejenigen Löcher 110 einem Paar zugeordnet, die im Wesentlichen in demselben radialen Abstand zur Rotationsachse R angeordnet sind, wie das Paar der Sendeeinheit 14 und des Empfängers 10.

Durch eine Rotation der Lochscheibe 11 um die Rotationsachse R ist das Loch 110 mit der zugeordneten Sendeeinheit 14 und dem zugeordneten Empfänger 10 in Deckung bringbar. Befindet sich das Loch 110 mit der zugeordneten Sendeeinheit 14 und dem zugeordneten Empfänger 10 in Deckung, können die von der Sendeeinheit 14 ausgesandten Lichtstrahlen L durch das Loch 110 hindurch- und auf der dem Empfänger 10 zugewandten Seite des Lochs 110 austreten. Der Empfänger 10 kann die aus dem zugeordneten Loch 110 austretenden Lichtstrahlen L erfassen.

Die Lochscheibe 11 ist abgesehen von den Löchern 110 lichtundurchlässig (bzw. allgemein im Wesentlichen undurchlässig für den Informationsträger). Befindet sich keines der einem Empfänger 10 zugeordneten Löcher 110 zumindest teilweise in Deckung mit dem Empfänger 10, kann der Empfänger 10 die von der zugeordneten Sendeeinheit 14 ausgesandten Lichtstrahlen L nicht erfassen.

Eine Rotation der Lochscheibe 11 um die Rotationsachse R bezüglich der Sendeeinheiten 14 und der Empfänger 10 bringt die Löcher 110 eines gemeinsamen ersten Musters M1 zeitlich versetzt in Deckung mit ihren jeweils zugeordneten Sendeeinheiten 14 und Empfängern 10.

Die Sendeeinheiten 14 und die Empfänger 10 sind jeweils über geeignete elektrische Signalleitungen 16 mit einer Auswerteeinrichtung 12 der Vorrichtung 1 wirkverbunden. Die Empfänger 10 senden Signale S1-S3 an die Auswerteeinrichtung 12. Die Auswerteeinrichtung 12 ist z.B. Form eines Mikroprozessors oder eines Computers ausgebildet. Insbesondere handelt es sich bei der Auswerteeinrichtung 12 um eine elektronische Triebwerkssteuerung (Electronic Engine Control, EEC) oder eine Triebwerksüberwachungseinheit (Engine Monitoring Unit, EMU) des Flugzeugtriebwerks 2.

Alternativ kann das zweite Muster M2 eine gebogene Linie beschreiben. Somit sind die Empfänger 10 entlang der gebogenen Linie angeordnet. Die gebogene Linie kann die Rotationsachse R schneiden. Beispielsweise ist die gebogene Linie B in Form eines Kreisbogens ausgebildet. Allgemein kann die gebogene Linie als Teilabschnitt einer Ellipse ausgebildet sein. Die gebogene Line kann so ausgebildet sein, dass die Empfänger 10 mit einem unregelmäßigen Winkelversatz entlang des Azimuts zueinander angeordnet sind.

Gemäß noch einer Alternative ist das zweite Muster M2 so ausgebildet, dass zwischen einigen oder allen benachbarten Empfängern 10 derselbe Versatz entlang des Azimuts oder im Wesentlichen derselbe Versatz entlang des Azimuts vorgesehen ist.

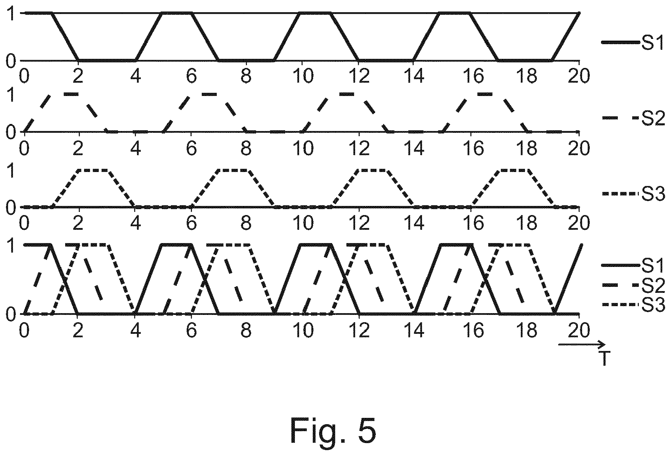

Fig. 5 zeigt schematisch den zeitlichen Verlauf der Signale S1-S3 der drei in Fig. 2 und 4 gezeigten Empfänger 10 bei einer Rotation der Lochscheibe 11 um die Rotationsachse R entlang einer in Fig. 3 eingezeichneten Drehrichtung D (im Uhrzeigersinn). Dabei ist auf der x-Achse die Zeit T aufgetragen und die y-Achse zeigt jeweils die Signalstärke der Signale S1-S3.

Ein erstes Signal S1 stammt von dem radial inneren Empfänger 10. Ein zweites Signal S2 stammt von dem radial mittleren Empfänger 10. Ein drittes Signal S3 stammt von dem radial äußeren Empfänger 10.

Sobald ein Loch 110 durch die Rotation der Lochscheibe 11 zwischen das zugeordnete Paar aus Sendeeinheit 14 und Empfänger 10 gerät, beginnt der Empfänger 10 Lichtstrahlen L der Sendeeinheit 14 zu empfangen und sendet ein von Null verschiedenes Signal S1-S3. Das Signal S1-S3 steigt entlang einer ansteigenden Flanke an, bis das Loch 110 in größtmöglicher Deckung mit dem Empfänger 10 liegt. Die Lichtstrahlen L sind im gezeigten Beispiel enger gebündelt als der Durchmesser des Lochs 110, sodass das Signal S1-S3 über einen Zeitraum etwa konstant auf einem Maximalwert bleibt. Sobald die Deckung des Lochs 110 mit dem Empfänger 10 durch eine weitere Rotation der Lochscheibe 11 wieder abnimmt, sinkt das Signal S1-S3 entlang einer abfallenden Flanke bis auf Null. Sobald ein nächstes, dem Empfänger 10 zugeordnetes Loch 110 ankommt, beginnt eine neue Periode des Signalverlaufs. Die Anzahl an Perioden pro Zeiteinheit bestimmt die Frequenz der Signale S1-S3.

Im unteren Bereich der Fig. 5 sind die Signale S1-S3 der drei Empfänger 10 übereinandergelegt dargestellt. Die Rotation der Lochscheibe 11 entlang der Drehrichtung D führt dazu, dass zuerst das erste Signal S1 ansteigt, dann das zweite Signal S2 und dann das dritte Signal S3.

Da sich die Löcher 110 gemäß Fig. 3 entlang des Azimuts gesehen teilweise überschneiden, können die Signale S1-S3 benachbarter Löcher 110 zum gleichen Zeitpunkt von Null verschieden sein. Hierzu kann z.B. auch Streulicht von einem Rand eines Lochs 110 betragen.

Wie anhand von Fig. 5 klar wird, weisen benachbarte erste Muster M1 einen solchen Musterabstand ϕ_{z} auf, dass die Signale S1-S3 aller Empfänger 10 zwischen den ersten Mustern M1 auf im Wesentlichen Null sinken. Es ist eine Signalpause der Signale S1-S3 aller Empfänger 10 zwischen zwei benachbarten ersten Mustern M1 ausgebildet. In der Signalpause nimmt keines der Signale S1-S3 der Empfänger 10 seinen Maximalwert an. Die Signalpause ist länger als der Abstand zwischen dem Übergang zwischen dem Maximalwert und der abfallenden Flanke des ersten Signals S1 und dem Übergang zwischen der ansteigenden Flanke und dem Maximalwert des dritten Signals S3.

Die Auswerteeinrichtung 12 analysiert die von den Empfängern 10 empfangenen Signale S1-S3. Anhand der Frequenz der Signale S1-S3 ermittelt die Auswerteeinheit 12 die Rotationsgeschwindigkeit der Lochscheibe 11 und damit der Niederdruckwelle 20 (allgemein des damit verbundenen drehbaren Bauteils). Optional bestimmt die Auswerteeinrichtung 12 jeweils die Frequenz der einzelnen Signale S1-S3 und berechnet den Mittelwert der Frequenzen. Eine Mittelwertbildung kann die Messgenauigkeit erhöhen.

Anhand der Reihenfolge der Perioden der einzelnen Signale S1-S3 ermittelt die Auswerteeinrichtung 12 die Rotationsrichtung der Lochscheibe 11 und damit der Niederdruckwelle 20 (allgemein des damit verbundenen drehbaren Bauteils). Würde die Signalstärke des dritten Signals S3 vor der Signalstärke des zweiten und des ersten Signals S2, S1 ansteigen, würde die Auswerteeinrichtung 12 ermitteln, dass die Lochscheibe 11 entgegen der Drehrichtung D rotiert (entgegen des Uhrzeigersinns).

Falls der mittlere Empfänger 10 ausfällt, kann durch die vorgesehene Signalpause auch anhand lediglich der Signale S1 und S3 des radial inneren und des radial äußeren Empfängers 10 noch die Rotationsrichtung bestimmt werden. Die Vorrichtung 1 kann somit als sogenanntes BITE ("Built In Test Equipment", eingebaute Testeinrichtung) eingesetzt werden. Hierzu wird die Lochscheibe 11 in eine Rotation versetzt. Dabei kann die Funktion der Lochscheibe 11, der Sendeeinheiten 14 und der Empfänger 10 geprüft werden.

Die Auswerteeinrichtung 12 ist zur Anzeige der ermittelten Rotationsgeschwindigkeit, absoluten Winkellage und/oder Rotationsrichtung mit einer Anzeigeeinheit 13 wirkverbunden.

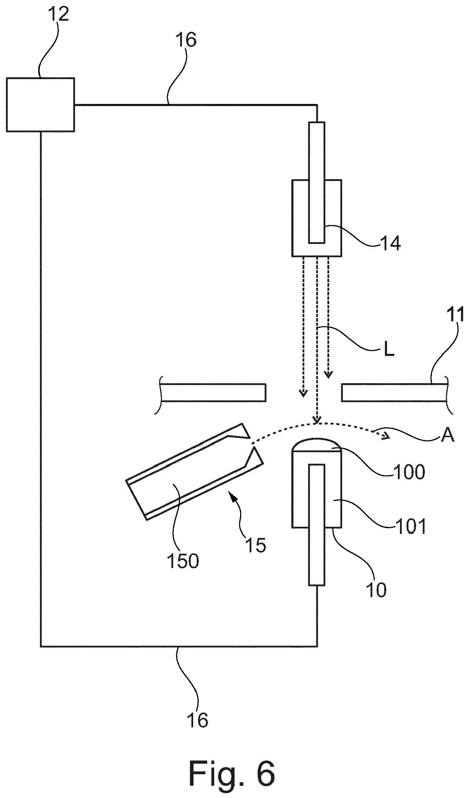

Fig. 6 zeigt eine in den Fig. 1-5 nicht dargestellte Antibeschlageinrichtung 15 mit einer Luftdüse 150. Die Luftdüse 150 ist benachbart zu einem oder mehreren der Empfänger 10 angeordnet.

Die Luftdüse 150 bläst einen Luftstrom A über den Empfänger 10, konkret über die Linse 100 des Empfängers 10. Der Luftstrom A hindert Schwebeteilchen aus dem den Empfänger 10 umgebenden Gas daran, sich an der Linse 100 abzulagern, insbesondere einen Ölnebel der Flugzeugturbine 2. Der Luftstrom A verhindert ferner eine Kondensation und/oder Resublimation von Bestandteilen des den Empfänger 10 umgebenden Gases an der Linse 100.

Somit verhindert die Luftdüse 150 ein Beschlagen der Linse 100 zumindest überwiegend, sodass die Funktion des Empfängers 10 im Wesentlichen nicht durch ein Beschlagen beeinträchtigt wird.

Optional können Luftleitbleche und/oder Strömungskanäle im Bereich des Luftstroms A vorgesehen sein. Hierdurch kann ein Einfluss durch mitgerissenen Ölnebel (nach der Art einer "jet pump", Strahlpumpe) unterbunden oder zumindest minimiert werden.

Optional ist die Luftdüse 150 einstellbar (z.B. hinsichtlich der Blasrichtung des Luftstroms A und/oder der Stärke des Luftstroms A) und hierzu z.B. mit der Auswerteeinrichtung 12 wirkverbunden und von der Auswerteeinrichtung 12 steuerbar.

Als Luft für den Luftstrom A dient z.B. Zapfluft, auch als Bleed Air bezeichnet. Die Luft für den Luftstrom A wird z.B. einer Verdichterstufe 240, 241 entnommen und der Luftdüse 150 zugeführt. Die Luft für den Luftstrom A wird insbesondere mit einem Überdruck bereitgestellt.

Es kann eine gemeinsame Luftdüse 150 für alle Empfänger 10 bereitgestellt werden. Alternativ wird jeweils eine Luftdüse 150 für jeden der Empfänger 10 bereitgestellt. Ebenso können eine oder mehrere Luftdüsen 150 für eine Sendeeinheit 14 oder mehrere Sendeeinheiten 14 vorgesehen werden.

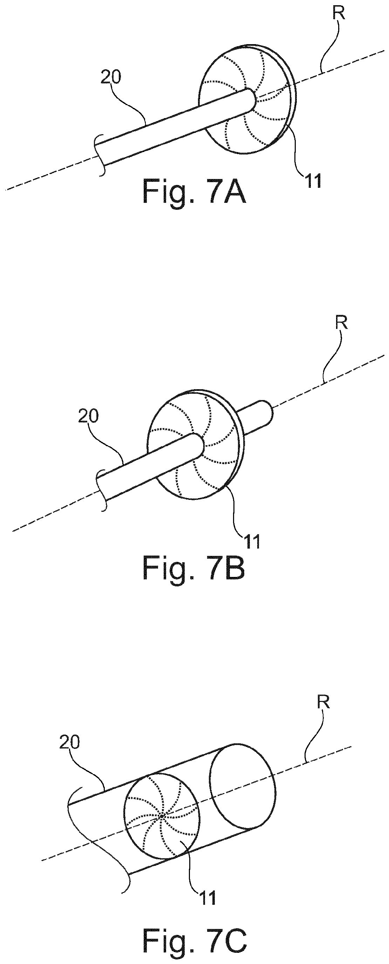

Die Fig. 7A-7C zeigen verschiedene beispielhafte Möglichkeiten einer Anordnung der Lochscheibe 11 an der Niederdruckwelle 20. Eine Anordnung an der Hochdruckwelle 21 ist in entsprechender Weise alternativ oder zusätzlich ebenfalls möglich. Die Lochscheibe 11 ist z.B. gemäß Fig. 7A an einem axialen Ende der Niederdruckwelle 20 aufgesetzt. Alternativ umfasst die Lochscheibe 11 eine zentrale Ausnehmung und umgreift die Niederdruckwelle 20 koaxial, wie in Fig. 7B gezeigt. Zum Beispiel ist die Lochscheibe 11 als Flansch ausgebildet. Gemäß einer weiteren, in Fig. 7C dargestellten Alternative ist die Lochscheibe 11 innerhalb der Niederdruckwelle 20 angeordnet. Zumindest im letztgenannten Beispiel ist die Niederdruckwelle 20 in Form einer Hohlwelle ausgebildet.

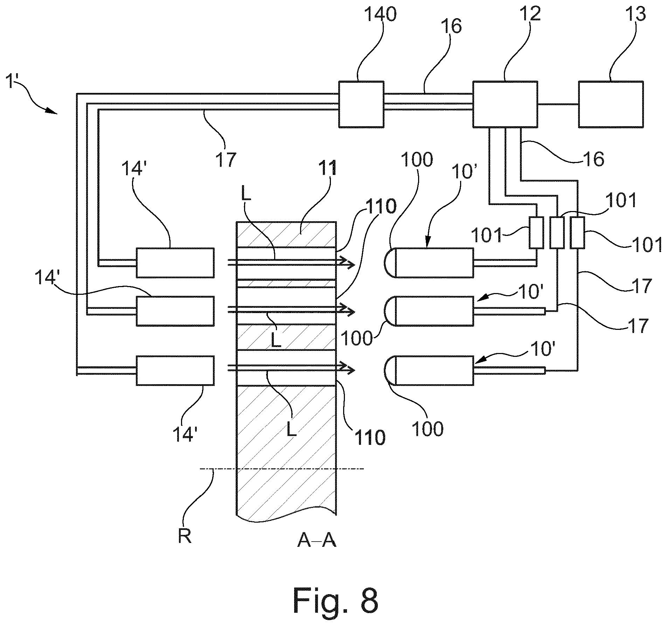

Fig. 8 zeigt ein Ausführungsbeispiel einer Vorrichtung 1' mit einer gegenüber dem Ausführungsbeispiel gemäß Fig. 2 abgewandelten Ausführung der Sendeeinheiten 14' und Empfänger 10'. Im Übrigen entspricht das Ausführungsbeispiel der Fig. 8 dem insbesondere in Fig. 2 gezeigten Ausführungsbeispiel.

Gemäß Fig. 8 sind keine optischen Sensoren an den Empfängern 10' angeordnet. Stattdessen sammeln die Empfänger 10' die (über die Linse 100) einstrahlenden Lichtstrahlen L und leiten sie in jeweils einen Lichtwellenleiter 17, z.B. ein Glasfaserkabel. Die Lichtwellenleiter 17 sind mit jeweils einem optischen Sensor 101 verbunden. Die optischen Sensoren 101 sind beabstandet von den Empfängern 10 angeordnet. Beispielsweise sind die optischen Sensoren 101 benachbart zu der Auswerteeinheit 12 angeordnet und/oder in einem Bereich des Flugzeugtriebwerks 2, in dem eine niedrigere Temperatur herrscht als im Bereich der Empfänger 10 und/oder in einem Bereich, der nicht von Ölnebel der Flugzeugturbine 2 beaufschlagt wird.

Alternativ ist nur ein optischer Sensor 101 für alle Empfänger vorgesehen. Eine Zuordnung der Signale der einzelnen Empfänger kann durch eine Kodierung erfolgen, etwa eine Farbkodierung (z.B. durch unterschiedlich eingefärbte Komponenten der einzelnen Empfänger 10 und/oder Lichtwellenleiter 17).

Die Sendeeinheiten 14' gemäß Fig. 8 sind als Abstrahleinheiten ausgebildet, die jeweils über einen Lichtwellenleiter 17 mit einer beabstandet angeordneten Lichtquelle 140 verbunden sind. Mögliche Anordnungen der Lichtquelle 140 entsprechen den möglichen Anordnungen der optischen Sensoren 101. Z.B. ist die Lichtquelle 140 benachbart zu zumindest einem optischen Sensor 101 angeordnet. Alternativ ist jede Sendeeinheit 14' über den jeweiligen Lichtwellenleiter 17 mit einer separaten Lichtquelle verbunden.

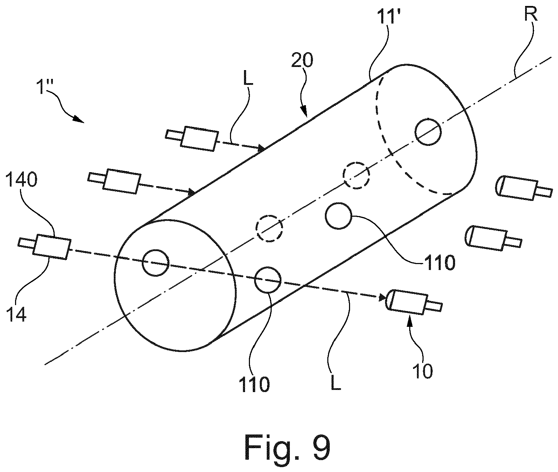

Fig. 9 zeigt ein Ausführungsbeispiel einer Vorrichtung 1" zur Messung der Rotationsbewegung des drehbaren Bauteils, hier der Niederdruckwelle 20.

Bei der Vorrichtung 1" gemäß Fig. 9 wird der Musterträger 11' durch einen Abschnitt des drehbaren Bauteils, hier die Niederdruckwelle 20, ausgebildet. Mehrere (drei) Sendeeinheiten 14 senden Informationsträger in Form von Lichtstrahlen L auf jeweils einen zugeordneten Empfänger 10 hin aus. Die zu den Empfängern 10 ausgesandten Lichtstrahlen L der Sendeeinheiten 14 verlaufen parallel zueinander.

Zwischen den Sendeeinheiten 14 und den Empfängern 10 ist der Musterträger 11' angeordnet. Zwischen den Sendeeinheiten 14 einerseits und den Empfänger 10 andererseits verläuft die Rotationsachse R.

Die zu den Empfängern 10 ausgesandten Lichtstrahlen L der Sendeeinheiten 14 verlaufen im Wesentlichen senkrecht zur Rotationsachse R.

Der Musterträger 11' weist eine kreiszylindrische Form auf, vorliegend eine hohlzylindrische mit einer umlaufenden Mantelfläche. In der Mantelfläche des Musterträgers 11' sind mehrere Musterstellen in Form von Löchern 110 ausgebildet. Auf einer jedem Loch 110 gegenüberliegenden Seite der Mantelfläche ist ein weiteres Loch 110 ausgebildet. Eine Gerade zwischen den gegenüberliegenden Löchern 110 schneidet im Wesentlichen die Rotationsachse R, insbesondere senkrecht. Sind durch Rotation des Musterträgers 11' um die Rotationsachse R beide gegenüberliegenden Löcher 110 entlang den Lichtstrahlen L von einer der Sendeeinheiten 14 angeordnet, können die Lichtstrahlen L den Musterträger 11' durch beide Löcher 110 passieren und werden vom zugeordneten Empfänger 10 erfasst. Werden die gegenüberliegenden Löcher 110 weiter rotiert, sodass sie nicht mehr entlang der Lichtstrahlen L angeordnet sind, können sie den Musterträger 11' nicht passieren.

Entlang der Rotationsachse R sind mehrere jeweils gegenüberliegende Paare von Löchern 110 und zugehörige Sendeeinheiten 14 und Empfänger 10 angeordnet. Die Sendeeinheiten 14 und die Empfänger 10 sind parallel zueinander ausgerichtet. Die entlang der Rotationsachse R nebeneinander angeordneten gegenüberliegenden Paare von Löchern 110 sind entlang des Azimutwinkels (des um die Rotationsachse R umlaufenden Winkels) versetzt zueinander angeordnet. Eine Rotation des Musterträgers 11' führt dazu, dass die einzelnen Empfänger 10 nacheinander Lichtstrahlen L erfassen.

Hinsichtlich der Auswertung der zugehörigen Signale wird auf vorstehende Beschreibung im Zusammenhang mit den Figuren 2-5 Bezug genommen.

Bereits oben im Zusammenhang mit Fig. 5 wurde erläutert, dass das Vorsehen von drei oder mindestens drei Empfängern 10 (und insbesondere der gleichen Anzahl von zugeordneten Sendeeinheiten 14) auch dann noch Messwerte liefern kann, wenn einer der Empfänger 10 oder eine der Sendeeinheiten 14 ausfällt. Diese Eigenschaft ist besonders bei sicherheitsrelevanten Anwendungen von Vorteil, etwa bei Flugzeugturbinen 2.

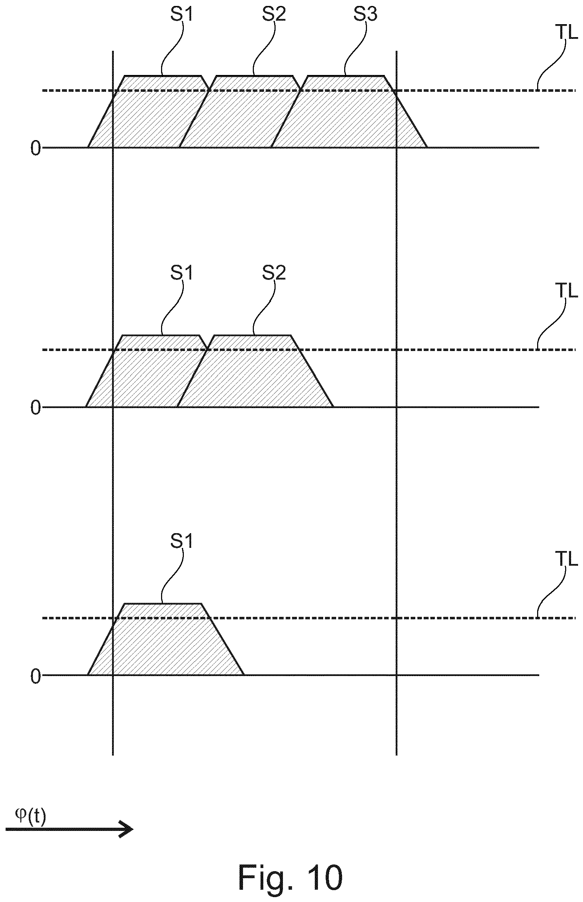

Fig. 10 zeigt ähnlich wie Fig. 5 die von drei Empfängern 10 gemessenen Signale S1-S3, wobei hier zur einfacheren Veranschaulichung nur die Signale S1-S3 eines einzigen ersten Musters M1 dargestellt sind. Ferner ist in Fig. 10 ein Triggerlevel TL eingezeichnet. Übersteigt ein Signal S1-S3 eines der Empfänger das Triggerlevel TL, so erkennt die Auswerteeinrichtung 12 das Signal S1-S3 als valide an. Beispielweise misst die Auswerteeinrichtung 12 die Zeitspanne, die das Signal S1-S3 größer ist als das Triggerlevel TL, und/oder die Zeitspanne zwischen dem Überschreiten des Triggerlevels TL des Signals S1 eines der Empfänger 10 bis zum Überschreiten des Triggerlevels TL des nächsten Signals S1, S2, S3 desselben Empfängers 10 oder eines der anderen Empfänger 10.

In Fig. 10 oben ist der vollständig funktionstüchtige Zustand gezeigt, in welchem alle Empfänger 10 Signale S1-S3 liefern. Anhand der gemessenen Signale S1-S3 kann die Auswerteeinrichtung 12 mit hoher Genauigkeit die Rotationsgeschwindigkeit, die Rotationsrichtung und die absolute Winkellage der Welle 20 bestimmen. Für die Messung der absoluten Winkellage kann vorgesehen sein, dass nur genau ein erstes Muster M1 am Musterträger 11 ausgebildet ist, oder dass nicht zwischen allen von mehreren ersten Mustern M1 derselbe Winkelversatz ausgebildet ist.

Um Messfehler zu minimieren oder zu bestimmen, kann die Auswerteeinrichtung 12 mehrere verschiedene Paare von Empfängern 10 (genauer gesagt den jeweiligen Signalen S1-S3 der Empfänger 10) bilden und anhand jedes der Paare einen Wert, z.B. für die Rotationsgeschwindigkeit (und/oder die Rotationsrichtung), ermitteln. Die somit separat ermittelten Werte können dann miteinander verglichen werden. Abweichungen zwischen den Werten können zur Bestimmung der Fehler herangezogen werden. Optional können Mittelwerte der mehreren Werte gebildet werden. Alternativ oder zusätzlich kann die Auswerteeinrichtung 12 die Rotationsgeschwindigkeit jeweils unabhängig voneinander anhand des ersten Signals S1, anhand des zweiten Signals S2 und anhand des dritten Signals S3 bestimmen. Diese Werte können dann wiederum miteinander verglichen werden, um Messfehler zu bestimmen oder zu minimieren.

Die einzelnen Löcher 110 (Musterstellen) im Musterträger 11 sind so angeordnet, dass sie in radialer Blickrichtung gesehen miteinander überlappen. Hierdurch ergeben sich die in Fig. 10 gezeigten, überlappenden Verläufe der Signale S1-S3. Konkret übersteigt im betrachteten Zeitraum stets mindestens eines der Signale S1-S3 das Triggerlevel TL. Hierdurch wird eine besonders große Winkelabdeckung erreicht, sodass zu einem großen Teil der Zeit oder sogar stets auswertbare Signale S1-S3 vorliegen. Die Vorrichtung kann somit eine besonders kurze Ansprechzeit aufweisen.

In der Mitte der Fig. 10 ist der Zustand mit einem ausgefallenen oder vorübergehend deaktivierten Empfänger 10 gezeigt, hier der Empfänger 10 mit dem dritten Signal S3. In diesem Zustand ist es möglich, die Rotationsgeschwindigkeit und die Rotationsrichtung zu messen. Für die Rotationsgeschwindigkeit kann auf Signale S1, S2 von zwei Empfängern zurückgegriffen werden, was noch immer eine redundante Messung erlaubt. Messungen der absoluten Winkellage der Welle 20 können noch durchgeführt werden, z.B. durch Interpolation zwischen zwei Messpunkten. Dies kann allerdings die Genauigkeit der Messung reduzieren, z.B. wenn im betrachteten Zeitfenster eine Beschleunigung stattfindet.

In Fig. 10 unten ist der Zustand mit zwei ausgefallenen oder vorübergehend deaktivierten Empfängern 10 gezeigt, hierbei handelt es sich um die Empfänger 10 mit dem zweiten und dritten Signal S2, S3. In diesem Zustand kann noch die Rotationsgeschwindigkeit gemessen werden, z.B. anhand der Zeitdauer, die das erste Signal S1 das Triggerlevel TL übersteigt oder anhand der Zeitdauer nach einem Überschreiten oder Unterschreiten des Triggerlevels TL bis zum nächsten Übersteigen des Triggerlevels TL. Eine Messung der Rotationsrichtung ist hingegen nicht mehr möglich, für eine Messung der absoluten Winkellage der Welle 20 kann wiederum zwischen zwei Messungen interpoliert werden, was mit einer reduzierten Messgenauigkeit einhergehen kann.

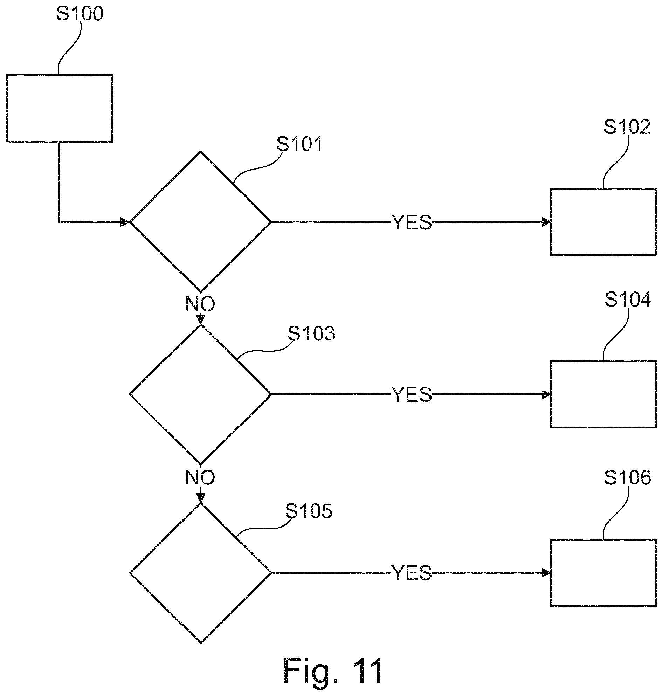

Fig. 11 zeigt ein Flussdiagramm für ein Verfahren zur Messung einer Rotationsbewegung unter Verwendung einer der hierin beschriebenen Vorrichtungen 1, 1', 1".

Zunächst wird in Schritt S100 eine der hierin beschriebenen Vorrichtungen 1, 1', 1" bereitgestellt.

In Schritt S101 wird geprüft, ob eine Messung lediglich der Rotationsgeschwindigkeit und lediglich für nicht sicherheitsrelevante Anwendungen angefordert wird. Falls dem so ist, wird es als ausreichend erachtet, wenn lediglich einer der Empfänger 10 aktiv ist. Die übrigen Empfänger 10 können abgeschaltet werden oder bleiben, z.B. um Energie zu sparen. In Schritt S102 kann dann eine Messung der Rotationsgeschwindigkeit mittels des Signals S1-S3 des einen Empfängers 10 vorgenommen werden. Hierzu wird der Musterträger 11, 11' gemeinsam mit der Welle 20, 21 relativ zu den Empfängern 10 rotiert und es wird das Signal S1-S3 des Empfängers 10 erfasst.

Andernfalls wird in Schritt S103 geprüft, ob eine Messung lediglich der Rotationsgeschwindigkeit und/oder Rotationsrichtung (optional für sicherheitsrelevante Anwendungen) angefordert wird. Falls dem so ist, wird in Schritt S104 eine Messung mittels zwei Empfängern 10 durchgeführt. Der übrige Empfänger 10 kann abgeschaltet werden oder bleiben. Falls einer der drei Empfänger 10 defekt ist, kann die Messung dennoch mit den übrigen beiden Empfängern 10 durchgeführt werden.

Andernfalls wird in Schritt S105 geprüft, ob eine präzise Messung der absoluten Winkellage angefordert wird. In diesem Fall wird in Schritt S106 eine Messung mit drei (oder zumindest drei) Empfängern 10 durchgeführt. Andernfalls kann z.B. eine Fehlermeldung ausgegeben werden.

Die in Schritt S106 durchgeführte Messung (oder allgemein jede mittels zumindest drei Empfängern 10 durchgeführte Messung) kann zur Minimierung von Messfehlern mit anderen zeitbasierten Messungen kombiniert werden, z.B. mit Messungen einer zusätzlichen Vorrichtung zur Messung einer Rotationsbewegung, insbesondere einer Vorrichtung, die eine bestimmte Winkellage der Welle 20, 21 erfasst. Insbesondere ist es möglich, die in Schritt S106 durchgeführte Messung einem TSA (Time-domain Synchronous Averaging, synchrone Mittelwertbildung im Zeitbereich) und/oder einem FFT (Fast Fourier Transformation, schnelle Fourier-Transformation) Algorithmus zuzuführen. Durch Anwendung des TSA können geometriebedingte (insbesondere drehwinkelkorrelierte) Schwingungen oder Vibrationen besser von anderen dynamischen (z.B. Drehschwingungen) und asynchron bzw. stochastisch auftretenden Störungen getrennt werden, da diese dann nicht im Zeitfenster sondern im Verdrehwinkel dargestellt werden. Eine Nachbearbeitung mittels FFT ergibt dann ein klares Bild der Ordnungen mit reduzierten Seitenbändern, die auf die Signalstörungen zurückzuführen sind.

Falls in einem der Schritte S102, S104 oder S106 festgestellt wird, dass nicht ausreichend Empfänger 10 zur Verfügung stehen, kann eine Fehlermeldung ausgegeben werden.

Anhand der vorstehenden Ausführungsbeispiele wurde die Flugzeugturbine 2 beispielhaft mit einer Vorrichtung 1, 1', 1" beschrieben. Die Flugzeugturbine 2 kann jedoch auch mehr als eine Vorrichtung 1, 1', 1" umfassen, insbesondere eine Vorrichtung 1, 1', 1" pro Welle 20, 21 und/oder eine Vorrichtung 1, 1', 1" an jedem Lager 200, 201, 210, 211.

### Bezugszeichenliste

- 1,1', 1": Vorrichtung
- 10, 10': Empfänger
- 100: Linse
- 101: optischer Sensor
- 11: Lochscheibe (Musterträger)
- 11': Musterträger
- 110: Loch (Musterstelle)
- 12: Auswerteeinrichtung
- 13: Anzeigeeinheit
- 14, 14': Sendeeinheit
- 140: Lichtquelle
- 15: Antibeschlageinrichtung
- 150: Luftdüse
- 16: elektrische Signalleitung
- 17: Lichtwellenleiter
- 2: Flugzeugtriebwerk
- 20: Welle (Niederdruckwelle)
- 200, 201: Lager
- 21: Welle (Hochdruckwelle)
- 210, 211: Lager
- 22: Gehäuse
- 23: Lufteinlauf
- 24: Verdichter
- 240: Niederdruckverdichter
- 241: Hochdruckverdichter
- 25: Brennkammer
- 26: Turbine
- 260: Niederdruckturbine
- 261: Hochdruckturbine
- 27: Düse
- A: Luftstrom
- B: gebogene Linie
- D: Drehrichtung
- ϕ: Azimutwinkel
- ϕₓ: Azimutwinkel (Musterbreite)
- ϕ_{z}: Azimutwinkel (Musterabstand)
- G: gerade Linie
- L: Lichtstrahlen
- M1: erstes Muster
- M2: zweites Muster
- R: Rotationsachse
- S1-S3: Signal
- T: Zeit
- TL: Triggerlevel

## Patentansprüche

1. Vorrichtung zur Messung einer Rotationsbewegung, insbesondere einer Rotationsrichtung, eines drehbaren Bauteils (20, 21), insbesondere einer Welle, mit einem Empfänger (10, 10') und einem Musterträger (11, 11`), der mindestens zwei Musterstellen (110) aufweist und der derart mit dem drehbaren Bauteil (20, 21) verbindbar oder verbunden ist, dass er gemeinsam damit um eine Rotationsachse (R) bezüglich dem Empfänger (10, 10') rotierbar ist, sodass dem Empfänger (10, 10') mindestens eine Musterstelle (110) zuwendbar ist, wobei der Empfänger (10, 10') ausgebildet und eingerichtet ist, eine ihm zugewandte Musterstelle (110) zu erfassen,
**gekennzeichnet durch**
mindestens zwei Empfänger (10, 10'), denen jeweils mindestens eine der Musterstellen (110) zuwendbar ist, wobei die Empfänger (10, 10') oder die Musterstellen (110) entlang eines um die Rotationsachse (R) umlaufenden Winkels (ϕ) versetzt zueinander angeordnet sind oder mit einem unterschiedlichen Versatz entlang des Winkels (ϕ) versetzt zueinander angeordnet sind.

2. Vorrichtung nach Anspruch 1, **dadurch gekennzeichnet, dass** die Empfänger (10, 10') und die Musterstellen (110) jeweils untereinander in einer Richtung senkrecht und/oder parallel zur Rotationsachse (R) versetzt zueinander angeordnet sind.

3. Vorrichtung nach Anspruch 1 oder 2, **dadurch gekennzeichnet, dass** die Musterstellen (110) gemäß einem ersten Muster (M1) angeordnet sind und die Empfänger (10, 10') gemäß einem zweiten Muster (M2) angeordnet sind, wobei das erste Muster (M1) von dem zweiten Muster (M2) verschieden ist.

4. Vorrichtung nach einem der vorhergehenden Ansprüche, **dadurch gekennzeichnet, dass** die Musterstellen (110) und/oder die Empfänger (10, 10') entlang einer geraden Linie (G) oder entlang einer gebogenen Linie (B) angeordnet sind.

5. Vorrichtung nach einem der vorhergehenden Ansprüche, **dadurch gekennzeichnet, dass** jeweils mindestens drei Musterstellen (110) und mindestens drei Empfänger (10, 10') vorgesehen sind, wobei jede der Musterstellen (110) jeweils zumindest einem der Empfänger (10, 10') zuwendbar ist.

6. Vorrichtung nach einem der vorhergehenden Ansprüche, **dadurch gekennzeichnet, dass** die Empfänger (10, 10') ausgebildet und eingerichtet sind, einen aus einer zugewandten Musterstelle (110) austretenden oder mit der Musterstelle (110) wechselwirkenden Informationsträger (L) zu erfassen, wobei der Informationsträger (L) insbesondere als Strahlung, als Massefluss und/oder als Schall ausgebildet ist, insbesondere als Lichtstrahlen, als Luftstrom und/oder als Ultraschall.

7. Vorrichtung nach Anspruch 6, **gekennzeichnet durch** zumindest einen Sensor (101) zum Erfassen des Informationsträgers (L), insbesondere in Form eines optischen Sensors, eines Masseflussmessers, eines Druckmessers und/oder eines Mikrofons.

8. Vorrichtung nach Anspruch 6 oder 7, **gekennzeichnet durch** mindestens eine Sendeeinheit (14, 14'), die ausgebildet und eingerichtet ist, den Informationsträger (L) auszusenden, und die insbesondere zumindest eine Lichtquelle (140), Luftdüse und/oder Schallquelle umfasst.

9. Vorrichtung nach Anspruch 8, **dadurch gekennzeichnet, dass** der Musterträger (11, 11') zwischen der Sendeeinheit (14, 14') und den Empfängern (10, 10`) angeordnet ist.

10. Vorrichtung nach einem der vorhergehenden Ansprüche, **dadurch gekennzeichnet, dass** der Musterträger (11) in Form einer Lochscheibe ausgebildet ist, insbesondere in Form einer koaxial zur Rotationsachse (R) angeordneten Kreisscheibe, wobei die Musterstellen (110) jeweils in Form eines Lochs im Musterträger (11) ausgebildet sind und der Musterträger (11) aus einem lichtundurchlässigen Material hergestellt ist.

11. Vorrichtung nach einem der vorhergehenden Ansprüche, **dadurch gekennzeichnet, dass** sich die Musterstellen (110) im Wesentlichen parallel zur Rotationsachse (R) durch den Musterträger (11) hindurch erstrecken.

12. Vorrichtung nach einem der vorhergehenden Ansprüche, **gekennzeichnet durch**
mindestens eine Antibeschlageinrichtung (15), welche einen Fluidstrom, insbesondere einen Luftstrom (A), auf mindestens einen der Empfänger (10, 10') und/oder zumindest eine Sendeeinheit (14, 14') richtet, um einen Niederschlag aus einem umgebenden Gas auf dem Empfänger (10, 10') zu verhindern.

13. Turbomaschine, insbesondere ein Flugzeugtriebwerk, mit mindestens einer Welle (20, 21) und mindestens einer Vorrichtung (1, 1', 1") gemäß einem der vorhergehenden Ansprüche.

14. Turbomaschine nach Anspruch 13, **dadurch gekennzeichnet, dass** zumindest eine Vorrichtung (1, 1', 1") im Bereich einer Lagerstelle der Welle (20, 21) angeordnet ist.

15. Verfahren zur Messung einer Rotationsbewegung, insbesondere einer Rotationsrichtung, eines drehbaren Bauteils (20, 21), insbesondere einer Welle, mit einem Empfänger (10, 10') und einem Musterträger (11, 11'), der mindestens zwei Musterstellen (110) aufweist und der derart mit dem drehbaren Bauteil (20, 21) verbunden wird, dass er gemeinsam damit um eine Rotationsachse (R) bezüglich dem Empfänger (10, 10') rotiert, sodass die Musterstelle (110) dem Empfänger periodisch zugewandt wird, wobei der Empfänger (10, 10') eine ihm zugewandte Musterstelle (110) erfasst,
**dadurch gekennzeichnet, dass**
mindestens zwei Empfänger (10, 10') vorgesehen werden, denen jeweils mindestens eine der Musterstellen (110) zuwendbar ist, wobei die Empfänger (10, 10') oder die Musterstellen (110) entlang eines um die Rotationsachse (R) umlaufenden Winkels (ϕ) versetzt zueinander angeordnet werden oder mit einem unterschiedlichen Versatz entlang des Winkels (ϕ) versetzt zueinander angeordnet werden.
